# EUROPEAN PATENT SPECIFICATION

(11) **EP 3 726 502 B1**
(45) Date of publication and mention of the grant of the patent: **21.10.2026**
(21) Application number: 20163122.3
(22) Date of filing: 13.03.2020
(51) Int. Cl.: G08G 5/00, G06Q 10/06, G06Q 50/40, G08G 5/21, G08G 5/51, G06Q 10/063

(54) **AIRCRAFT TAXI COST DETERMINATION SYSTEMS AND METHODS**
SYSTEM UND VERFAHREN ZUR KOSTENBESTIMMUNG VON FLUGZEUGTAXIS
SYSTÈMES ET PROCÉDÉS DE DÉTERMINATION DES COÛTS DE ROULAGE D'UN AÉRONEF

(30) Priority: 15.04.2019 US 201916383729
(43) Date of publication of application: 21.10.2020
(73) Proprietor: The Boeing Company, Arlington, VA 22202 (US)
(72) Inventor: CABOS, Ralf Rene Shu-Zong, Chicago, Illinois 60606-1596 (US); KNEUPER, Nils, Chicago, Illinois 60606-1596 (US)
(74) Representative: Bryn-Jacobsen, Caelia

(56) References cited:
- US-A1- 2010 204 909
- US-A1- 2013 131 888
- M I MD ITHNAN ET AL: "Aircraft Taxiing Strategy Optimization", 1 January 2015 (2015-01-01), XP055595667, Retrieved from the Internet <URL:http://rstrail.nl/new/wp-content/uploads/2015/02/izzudin_ithnan.pdf> [retrieved on 20190611]
- CHEN JUN ET AL: "Toward a More Realistic, Cost-Effective, and Greener Ground Movement Through Active Routing: A Multiobjective Shortest Path Approach", IEEE TRANSACTIONS ON INTELLIGENT TRANSPORTATION SYSTEMS, IEEE, PISCATAWAY, NJ, USA, vol. 17, no. 12, 1 December 2016 (2016-12-01), pages 3524 - 3540, XP011635251, ISSN: 1524-9050, [retrieved on 20161123], DOI: 10.1109/TITS.2016.2587619

## Description

### FIELD OF THE DISCLOSURE

Examples of the present disclosure generally relate to aircraft taxi cost determination systems and methods, and more particularly to systems and methods that are configured to determine costs for taxi options for aircraft at an airport.

### BACKGROUND OF THE DISCLOSURE

Various types of aircraft are used to transport passengers and cargo between various locations. Each aircraft typically flies between different locations according to a defined flight plan or path.

An airport typically includes numerous gates at which aircraft are positioned to allow passengers to board the aircraft. The aircraft at the gate is on a tarmac that connects to a runway through one or more taxiways. After the aircraft pushes back from the gate, the aircraft taxis to the runway via the taxiway(s).

Typically, a taxiing process is performed based on only a few constraints, such as a maximum taxi speed and traffic on airport surfaces. On a taxiway, a flight crew maneuvers an aircraft by pushing thrust levers to an arbitrary position, without knowing whether an associated level of thrust is cost effective. For example, an increased amount of thrust may cause the aircraft to move at an increased speed and arrive at an end of the taxiway in a short period of time, but the engines may burn an increased amount of fuel due to the directed amount of thrust, which therefore increases fuel cost.

US2020/204909A1 in an abstract states "The invention relates to a method for aiding the taxiing of an aircraft comprising a plurality of onboard propulsion means and which is able to move over an airport zone according to at least one specific taxiing procedure making it possible to reduce fuel consumption, the method being characterized in that it implements the following steps during the phase of taxiing of the aircraft on an airport: Checking of the taxiing conditions for the implementation of the said taxiing procedure and calculation of the implementation parameters of the procedure, Calculation of the taxiing performance data resulting from the implementation of the taxiing procedure, Display of the taxiing directives and performance related to the taxiing procedure, Monitoring of the parameters of the avionics systems during the implementation of the taxiing procedure. The invention applies to taxiing plan formulation systems and/or aircraft monitoring systems."

US2013/131888A1 in an abstract states "A taxi method for an aircraft having a primary thrust engine taxi system and an electric taxi system is provided. The method involves obtaining aircraft and airport status data and generating therefrom taxi drive information indicative of the relative cost of taxiing the aircraft along a predetermined route using the electric taxi system versus the aircraft engine taxi system. The taxi drive index information is presented to a user."

An existing technique for aircraft routing during taxiing is described in CHEN JUN ET AL: "Toward a More Realistic, Cost-Effective, and Greener Ground Movement Through Active Routing: A Multiobjective Shortest Path Approach", IEEE TRANSACTIONS ON INTELLIGENT TRANSPORTATION SYSTEMS, IEEE, PISCATAWAY, NJ, USA, vol. 17, no. 12, 1 December 2016 (2016-12-01), pages 3524-3540 XP011635251.

### SUMMARY OF THE DISCLOSURE

The present invention is set out in the independent claims, with some optional features set out in the claims dependent thereto.

A need exists for a system and method for determining various taxiing options for aircraft. Further, a need exists for a system and method for providing costs for one or more taxiing options.

With those needs in mind, certain examples of the present disclosure provide an aircraft taxi cost determination system that includes a taxi cost determination control unit that determines a total cost of one or more available taxi scenarios for an aircraft at an airport based on fuel cost, engine cost, crew cost, and maintenance cost for the available taxi scenario(s).

The aircraft taxi cost determination system may also include an environmental sub-system that is in communication with the taxi cost determination control unit. The environmental sub-system stores environmental data. The taxi cost determination control unit analyzes the environmental data when determining the total cost of the available taxi scenario(s).

The aircraft taxi cost determination system may also include an airport database that is in communication with the taxi cost determination control unit. The airport database stores airport data. The taxi cost determination control unit analyzes the airport data when determining the total cost of the available taxi scenario(s).

The aircraft taxi cost determination system may also include an aircraft database that is in communication with the taxi cost determination control unit. The aircraft database stores aircraft data regarding the aircraft. The taxi cost determination control unit analyzes the aircraft data when determining the total cost of the available taxi scenario(s).

The aircraft taxi cost determination system may also include a flight schedule sub-system that is in communication with the taxi cost determination control unit. The flight schedule sub-system stores flight schedule data for the airport. The taxi cost determination control unit analyzes the flight schedule data when determining the total cost of the available taxi scenario(s).

In at least one example, the taxi cost determination control unit accounts for engine warm-up time for the aircraft when determining the total cost of the available taxi scenario(s). In at least one example, the taxi cost determination control unit accounts for a required time frame within which the aircraft is required to take off when determining the total cost of the available taxi scenario(s). In at least one example, the taxi cost determination control unit accounts for a number of stop bars on a taxiway when determining the total cost of the available taxi scenario(s).

In at least one example, the taxi cost determination control unit establishes possible taxi scenarios based on one or more of environmental data, taxi data, aircraft data, airport data, or flight schedule data. The taxi cost determination control unit discards one or more possible taxi scenarios that are outside of a required time frame as one or more unavailable taxi scenarios. The taxi cost determination control unit identifies one or more possible taxi scenarios that are within the required time frame as the one or more available taxi scenarios. The taxi cost determination control unit identifies a lowest cost available taxi scenario within the available taxi scenarios.

Certain examples of the present disclosure provide an aircraft taxi cost determination method that includes determining, by a taxi cost determination control unit, a total cost of one or more available taxi scenarios for an aircraft at an airport based on fuel cost, engine cost, crew cost, and maintenance cost for the one or more available taxi scenarios.

The aircraft taxi cost determination method may also include analyzing (by the taxi cost determination control unit) environmental data during the determining, analyzing (by the taxi cost determination control unit) airport data during the determining, analyzing (by the taxi cost determination control unit) aircraft data during the determining, and/or analyzing (by the taxi cost determination control unit) flight schedule data during the determining.

The aircraft taxi cost determination method may also include accounting for (by the taxi cost determination control unit) one or more of engine warm-up time for the aircraft, a required time frame within which the aircraft is required to take off, or a number of stop bars on a taxiway during the determining.

In at least one example, the determining includes establishing possible taxi scenarios based on one or more of environmental data, taxi data, aircraft data, airport data, or flight schedule data, discarding one or more possible taxi scenarios that are outside of a required time frame as one or more unavailable taxi scenarios, identifying one or more possible taxi scenarios that are within the required time frame as the one or more available taxi scenarios, and identifying a lowest cost available taxi scenario within the one or more available taxi scenarios.

### BRIEF DESCRIPTION OF THE DRAWINGS

Figure 1 illustrates a schematic block diagram of an aircraft taxi cost determination system, according to an example of the present disclosure.
Figure 2 illustrates a simplified schematic diagram of a taxiway of an airport.
Figure 3 illustrates a graph of taxi costs over time.
Figure 4 illustrates equations for determining total taxi cost, according to an example of the present disclosure.
Figure 5 illustrates a simplified top view of an aircraft on a taxiway.
Figure 6 illustrates a graph of a speed of the aircraft on the taxiway over time.
Figure 7 illustrates a graph of distance of the between the aircraft and a target location on the taxiway over time.
Figure 8 illustrates a graph of thrust force of the aircraft on the taxiway over time.
Figure 9 illustrates a graph of accumulated taxi cost in relation to time.
Figure 10 illustrates a flow chart of an aircraft taxi determination method, according to an example of the present disclosure.
Figure 11 is a diagrammatic representation of a front view of a display showing available taxi scenarios, according to an example of the present disclosure.
Figure 12 is a diagrammatic representation of a front perspective view of an aircraft, according to an exemplary example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional examples that also incorporate the recited features. Moreover, unless explicitly stated to the contrary, examples "comprising" or "having" an element or a plurality of elements having a particular condition may include additional elements not having that condition.

Certain examples of the present disclosure provide aircraft taxi cost determination systems and methods that account for costs of taxiing at an airport. The taxi determination systems and methods are configured to determine efficient taxiing strategies for an aircraft. Notably, if an aircraft taxies fast, costs growing with time are reduced, but fuel and engine wear costs may increase. Conversely, if the aircraft taxies slow, fuel costs may be reduced, but the total time of taxiing increased, which may increase time dependent costs. Certain examples of the present disclosure are configured to define a total taxi cost function in which various factors are considered when searching for an efficient, cost-efficient taxiing strategy.

Certain examples of the present disclosure determine a cost-efficient taxiing strategy, in order to reduce overall and specific operation costs, including fuel, engine leasing, maintenance, and crew. The aircraft taxi cost determination systems and methods account for costs associated with fuel, maintenance, crew and engine cost.

Certain examples of the present disclosure provide an aircraft taxi cost determination system that includes a taxi cost determination control unit that is configured to collect data related to aircraft and environmental features and calculate multiple taxi scenarios. The taxi costs determination control unit is further configured to select a taxi scenario representing a lowest overall cost. Certain examples of the present disclosure provide an aircraft taxi determination method that includes collecting a plurality of data types related to multiple aspects of the aircraft taxi process, calculating multiple taxi scenarios based on the collected data, and predicting the taxi scenario representing a lowest overall cost.

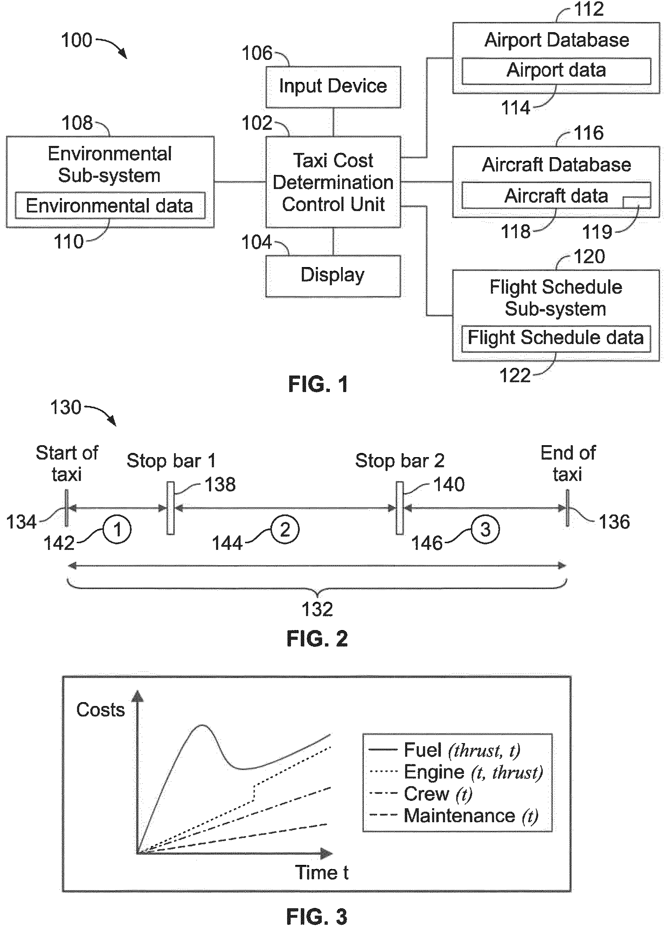

Figure 1 illustrates a schematic block diagram of an aircraft taxi cost determination system 100, according to an example of the present disclosure. The aircraft taxi cost determination system 100 includes a taxi cost determination control unit 102. A display 104, such as a monitor, screen or the like, which may onboard an aircraft, may be in communication with the taxi cost determination control unit 102, such as through one or more wired or wireless connections. An input device 106, such a keyboard, mouse, touchscreen, or the like, which may onboard an aircraft, may also be in communication with the taxi cost determination control unit 102, such as through one or more wired or wireless connections. In at least one example, the taxi cost determination control unit 102, the display 104, and the input device 106 may be in a common housing, such as a flight computer onboard an aircraft. In some examples, the taxi cost determination control unit 102 may be remotely located from one or both of the display 104 and/or the input device 106. For example, the taxi costs determination control unit 102 may be at a central monitoring location within an airport, while the display 104 and the input device 106 may be part of a flight computer onboard an aircraft.

The taxi cost determination control unit 102 may be in communication with an environmental sub-system 108, such as through one or more wired or wireless connections. The taxi cost determination control unit 102 and the environmental sub-system 108 may be at the same location or different locations. The environmental sub-system 108 stores environmental data 110 regarding a location at which an aircraft is situated, such as an airport. The environmental data 110 may include wind vector and speed, temperature, air pressure, humidity, and/or the like. In at least one example, the environmental sub-system 108 may be or include a meteorological service.

The taxi cost determination control unit 102 may also be in communication with an airport database 112, such as through one or more wired or wireless connections. The taxi cost determination control unit 102 and the airport database 112 may be at the same location or different locations. The airport database 112 stores airport data 114 for the airport at which an aircraft is currently located. For example, the airport data 114 may include information regarding taxiways, runways, and the like at the airport.

The taxi cost determination control unit 102 may also be in communication with an aircraft database 116, such as through one or more wired or wireless connections. The taxi cost determination control unit 102 and the aircraft database may be at the same location or different locations. The aircraft database 116 stores aircraft data 118 for an aircraft. For example, the aircraft data 118 may include information regarding an actual mass of the aircraft, a static friction component, and/or the like.

The taxi cost determination control unit 102 may also be in communication with a flight schedule sub-system 120, such as through one or more wired or wireless connections. The taxi cost determination control unit 102 and the flight schedule sub-system 120 may be at the same location or different locations. The flight schedule sub-system 120 stores flight schedule data 122 for an airport. The flight schedule data 122 includes scheduled departure and arrival times for aircraft at the airport.

In operation, the taxi cost determination control unit 102 analyzes one or more of the environmental data 110, the airport data 114, the aircraft data 118, and the flight schedule data 122 to determine a cost-efficient taxiing strategy for an aircraft. In at least one example, the taxi cost determination control unit 102 determines a cost of at least one available taxi scenario for an aircraft at an airport based on a total cost of taxiing, which factors in the environmental data, the airport data, the aircraft data, and the flight schedule data. The taxi cost determination control unit 102 may show one or more taxiing options, such as the most cost-efficient taxiing strategy, on the display 104.

Figure 2 illustrates a simplified schematic diagram of a taxiway 130 of an airport. The taxiway 130 has a distance 132 from a starting point 134 to an end point 136. Between the starting point 134 and the end point 136, one or more stop bars 138 and 140 may be positioned. The stop bars 138 are areas on the taxiway 130 at which an airport is required to stop for at least a predetermined period of time. As such, during a taxiing process, an aircraft may move on the taxiway 130 during a first stage 142 between the starting point 134 and the stop bar 138, at which point the aircraft stops. A second stage 144 extends between the stop bar 138 and the stop bar 140. The aircraft moves on the taxiway 130 during the second stage between the stop bar 138 and the stop bar 140, at which point the aircraft again stops. A third stage 146 extends between the stop bar 140 and the end point 136. The aircraft moves on the taxiway 130 during the third stage 146 between the stop bar 140 and the end point 136, which leads to a runway.

Referring again to Figure 1, the taxi cost determination control unit 102 determines a total taxi cost for an aircraft based on the following: $Total Taxi Cost = Fuel Cost + Engine Cost + Maintenance Cost + Crew Cost$ As shown above, the total taxi cost equals the fuel cost, the engine cost, the maintenance cost, and the crew cost. That is, the total taxi cost is the sum of all the noted cost factors. The taxi cost determination control unit 102 determines a total taxi cost on numerous cost factors. In at least one example, the taxi cost determination control unit 102 is configured to determine the costs of one or more taxi scenarios (that is, options for an aircraft to taxi) based on fuel cost, engine cost, maintenance cost, and crew cost. Instead of just determining fuel cost or a time of taxiing, the taxi cost determination control unit 102 determines a comprehensive total taxi cost that accounts for various costs associated with taxiing.

The fuel cost is a function of thrust over time. For example, fuel is burned as the engines of an aircraft provide thrust over time. An increased amount of fuel burn increases fuel cost. In at least one example, the fuel cost is part of the aircraft data 118.

The engine cost also depends on thrust. For example, the engine cost is based on the following: $Engine Cost = {Cost}_{Eng} \left(t\right) + SpecialCost \left(thrust\right)$

As shown, the engine costs equals the cost of the engine, such as a leasing cost of the engine, over time (such as a time of a leasing contract) plus an additional special cost that is a function of thrust. Engine leasing costs may be set at a constant hourly rate. The special cost may be an engine leasing cost that is covered for cases in which an engine manufacturer demands extra fees for exceptional thrust, such as maximum take-off thrust. For example, the special cost may be additional costs that are applied when an engine is operated at or above a predefined threshold (such as a percentage of total possible thrust, a particular rate or time of use, and/or the like). In at least one example, the engine cost is part of the aircraft data 118.

The maintenance cost depends on time. For example, the maintenance cost is based on the following: $Maintenance Cost = {Cost}_{Mx} \left(t\right)$

As shown, the total maintenance costs is the cost of maintenance (that is Cost_{Mx}), which includes labor costs, parts costs, etc., which is known to an airline over time. In at least one example, the maintenance cost is part of the aircraft data 118.

The crew cost also depends on time. For example, the crew cost is based on the following: $Crew Cost = {Cost}_{cabin} \left(t\right) + {Cost}_{FlightDeck} \left(t\right)$

As shown, the total crew cost is the cost of cabin crew (such as flight attendants) over time plus the cost of flight deck (such as pilot and co-pilot) over time. In at least one example, the crew cost is part of the aircraft data 118.

Figure 3 illustrates a graph of taxi costs over time. The fuel cost, the engine cost (such as engine leasing cost), the maintenance cost, and the crew costs affect the total cost of taxiing. The fuel cost depends on thrust level and time. Similarly, the engine cost depends on thrust level and time. The maintenance cost and the crew cost depend on time. Referring to Figures 1 and 3, the taxi cost determination control unit 102 determines a total taxi cost based on fuel cost, engine cost, maintenance cost, and crew cost.

In at least one example, the taxi cost determination control unit 102 may also analyze one or more boundary conditions. For example, the taxi cost determination control unit 102 may take account of engine warm-up time for an aircraft. The engine warm-up time is a required minimum amount of time for engines of an aircraft to warm-up before being allowed to take off, and may be a function of aircraft type. The engine warm-up time may be part of the aircraft data 118.

Another boundary condition may be time constraints. For example, the taxi cost determination control unit 102 may account for a required time frame within which the aircraft is required to take off. For example, the flight schedule data 122 includes a latest time at which the aircraft is able to depart from the airport.

Another boundary condition may be a number of stop bars. For example, the taxi cost determination control unit 102 may account of a required number of stop bars along a taxiway. Information regarding the taxiway and the stop bars is stored in the airport data 114.

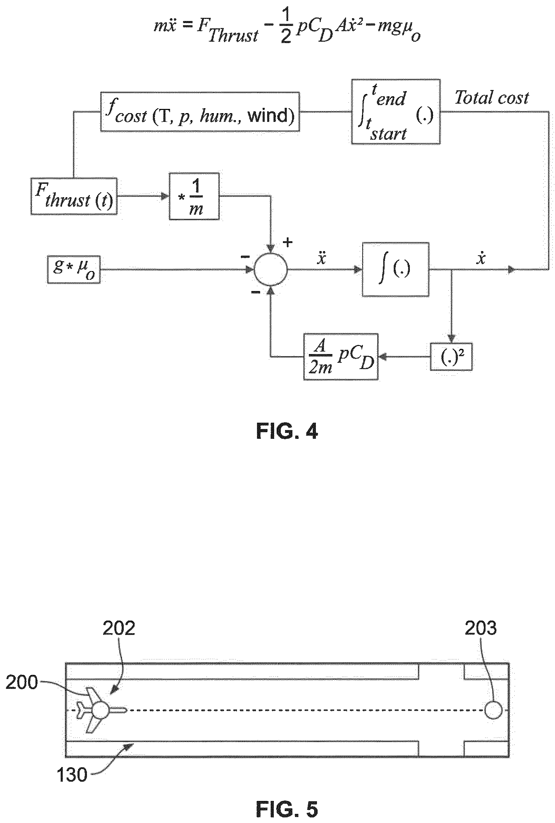

Figure 4 illustrates equations for determining total taxi cost, according to an example of the present disclosure. As shown in Figure 4, the taxi cost determination control unit 102 may determine acceleration and velocity values for a taxiing strategy, in which m is the mass of the aircraft, F_{Thurst} is the exerted thrust force, ρ is the drag at wheels of the aircraft by the surface of the taxiway, C_{D} is the coefficient of drag of the aircraft, A is the area of the aircraft affected by drag (such as an outer surface of the aircraft), g is gravitational acceleration, and µ₀ the coefficient of static friction.

Figure 5 illustrates a simplified top view of an aircraft 200 on the taxiway 130. The aircraft 200 is at a current position 202 and is to move to a target location 203, such as an entrance to a runway.

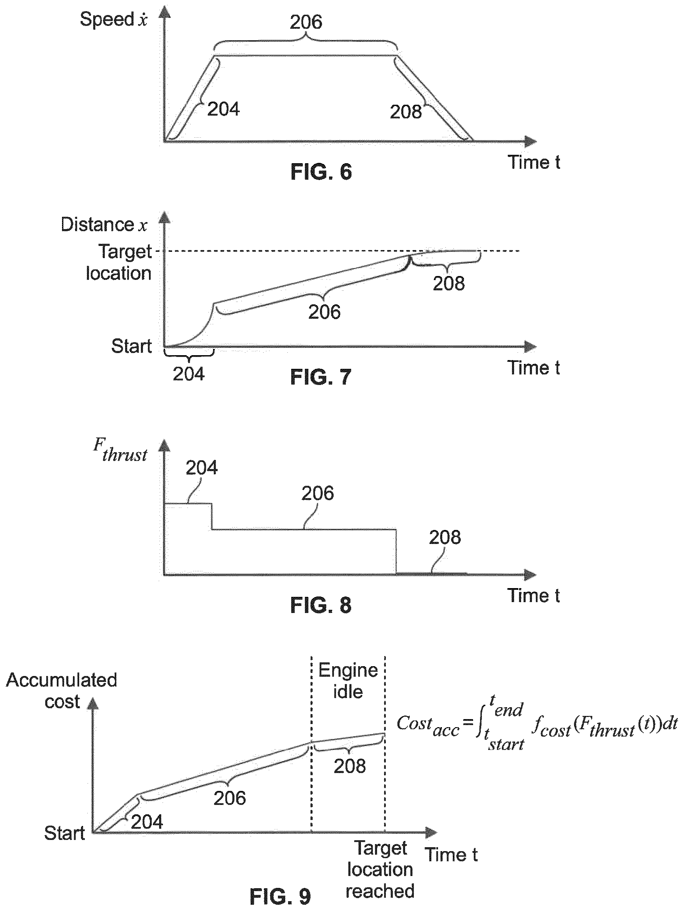

Figure 6 illustrates a graph of a speed of the aircraft 200 on the taxiway 130 over time. Figure 7 illustrates a graph of distance of the between the aircraft 200 and the target location 203 on the taxiway 130 over time. Figure 8 illustrates a graph of thrust force of the aircraft 200 on the taxiway 130 over time. Figure 9 illustrates a graph of accumulated taxi cost in relation to time. Referring to Figures 5-9, the aircraft 200 initially gains speed (such as through increased thrust force) through acceleration during time 204 to begin moving towards the target location 203. After reaching a desired speed, the aircraft maintains the desired speed over a time 206. After the time 206, the aircraft idles for time 208, which allows the aircraft to roll to the target location 203. As shown in Figure 9, the cost of taxiing rate is greatest at time 204, and lowest at time 208. However, the total accumulated cost of taxiing includes the costs of the times 204, 206, and 208, from a start point (that is, the position 202 shown in Figure 5) to an end point (that is, the target location 203). Notably, the total cost is dependent on thrust.

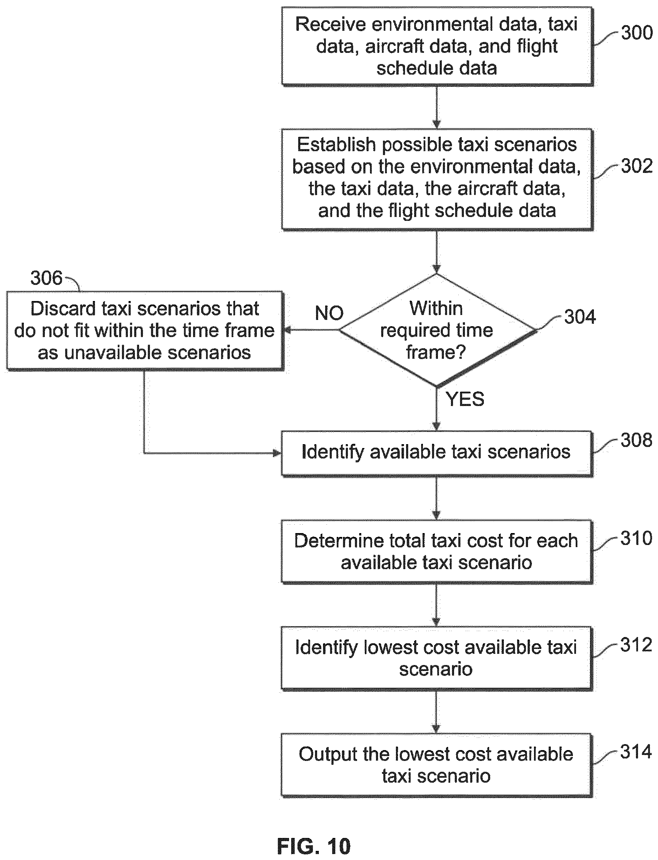

Figure 10 illustrates a flow chart of an aircraft taxi determination method, according to an example of the present disclosure. Referring again to Figures 1 and 10, at 300, the taxi costs determination control unit 102 receives the environmental data 110, the aircraft data 118 (which may include taxi data 119, the airport data 114, and the flight schedule data 122. As explained herein, the taxi costs determination control unit 102 analyzes the environmental data 110, the airport data 114, the aircraft data 118, and/or the flight schedule data 122 when determining costs of taxi scenarios.

The environmental data 110 may include wind vector and speed, temperature, air pressure, humidity, and gravitational acceleration. The airport data 114 and/or the flight schedule data 122 may include the taxi data 119, which may be input into the taxi cost determination control unit 102, such as through the input device 106. For example, the airport data 114 may include a distance to be traveled to a target location (such as the target location 203 shown in Figure 5), an earliest point in time to arrive at the target location (which may either be input, or retrieved from the flight schedule data 122), a latest point in time to arrive at the target location (which may either be input, or retrieved from the flight schedule data 122), a maximum taxi speed, and a minimum taxi speed. The aircraft data 118 may include the actual mass of the aircraft 200 (shown in Figure 5), a static friction component (such as of the aircraft and/or the taxiway), and/or the like.

At 302, the taxi cost determination control unit 102 establishes possible taxi scenarios based on the environmental data 110, the taxi data 119, the aircraft data 118, the airport data 114, and/or the flight schedule data 122. In response to receiving the environmental data 110, the airport data 114, the aircraft data 118, and/or the flight schedule data 122, the taxi cost determination control unit 102 establishes possible taxi scenarios. In at least one example, the taxi cost determination control unit 102 establishes all possible taxi scenarios, which includes all possible quantitative acceleration and speed values. For example, the taxi cost determination control unit 102 may establish an array of quantitatively different acceleration instances (for example, 1 m/s², 1.5 m/s², 2 m/s², ... n m/s²). The taxi cost determination control unit 102 may also establish an array of quantitatively different speed instances (for example, 1 m/s, 1.5 m/s, 2 m/s, ... n m/s). The taxi cost determination control unit 102 may then provide combinations of each acceleration instance and each speed instance (for example, 1 m/s² and 1 m/s, 1 m/s² and 1.5 m/s, 1 m/s² and 2 m/s, ... n m/s² and n/s).

At 304, the taxi cost determination control unit 102 determines whether each possible taxi scenario is within a required time frame. If a possible taxi scenario is not within a required time frame at 304, the taxi cost determination control unit 102 discards the possible taxi scenarios that do not fit within the required time frame as unavailable taxi scenarios at 306. If the possible taxi scenarios are within the required time frame at 304 (and/or those that have not been discarded at 306), the method proceeds to 308, at which the taxi cost determination control unit 102 identifies such taxi scenarios as available taxi scenarios. For example, certain taxi scenarios may not reach the target location 203 (shown in Figure 5) within a time frame as indicated in the flight schedule data 122. For example, a taxi scenario of an aircraft traveling 500 feet in 2 hours may be ignored by the taxi cost determination control unit 102 and discarded as unavailable. Accordingly, the taxi cost determination control unit 102 identifies available taxi scenarios by removing time restricted scenarios from the possible taxi scenarios.

Next, after determining the available taxi scenarios at 308, the taxi cost determination control unit 102 determines a total taxi cost for each available taxi scenario at 310. For example, the taxi cost determination control unit 102 may determine the total taxi cost for each available taxi scenario based on the following: $Total Taxi Cost = Fuel Cost + Engine Cost + Maintenance Cost + Crew Cost$

At 312, the taxi cost determination control unit 102 then determines the lowest cost available taxi scenario. For example, out of all the available taxi scenarios, each has a determined total taxi cost. The taxi cost determination control unit 102 identifies the lowest determined total taxi cost as the lowest cost taxi scenario. At 314, the taxi cost determination control unit 102 may then output the lowest cost available taxi scenario, which may be shown on the display 104.

In at least one example, the taxi cost determination control unit 102 may determine a roll-out distance and time if aircraft engines are returned to idle for the aircraft to stop moving for each combination of acceleration instance and speed instance. Thus, the taxi cost determination control unit 102 may generate plurality of combinations of acceleration instance, speed instance, and time. For each of such triplets, the taxi cost determination control unit 102 may shorten a duration of constant taxi speed so that the roll-out meets a maximum required taxi time.

As described, the taxi cost determination control unit 102 is configured to determine the lowest (or minimum) cost available taxi scenario. The taxi cost determination control unit 102 may define the cost function, such as the total taxi cost, as described herein. The taxi cost determination control unit 102 may identify dependent variables for each cost factor, such as thrust and time for fuel cost and engine cost, and time for maintenance cost and crew cost.

The taxi cost determination control unit 102 may also account for the boundary conditions. For example, various boundary conditions, such as engine warmup, time constraints (minimum time to taxi and maximum time to taxi), and stop bars may be assessed by the taxi cost determination control unit in relation to discarding certain taxi scenarios as unavailable. For example, if a taxi scenario does not allow for sufficient engine warmup, the taxi cost determination control unit 102 may discard the taxi scenario as unavailable. In some examples, if a taxi scenario takes too long (for example, beyond a scheduled departure time), the taxi cost determination control unit 102 may discard the taxi scenario as unavailable. In some examples, if a taxi scenario does not account of a required stop time at stop bars, the taxi cost determination control unit 102 may discard the taxi scenario as unavailable.

As noted, if an aircraft taxies fast, costs growing with time may be less, but fuel and engine wear costs may increase. The taxi cost determination control unit 102 analyzes large amounts of data to determine available taxi scenarios that allow an operator to determine whether any savings generated by taxiing fast overcome fuel costs and engine costs. Conversely, while taxiing slowly may save fuel costs and engine costs, a total taxiing time is increased. The taxi cost determination control unit 102 determines the available taxi scenarios to allow the operator to determine whether fuel cost and engine cost are overcome, or rendered moot, by a taxi time that is too long. In short, the taxi costs determination control unit defines the total taxi cost to account for each of fuel cost, engine cost, maintenance cost, and crew cost, thereby accounting for various (in at least one example, all) costs to allow for determination of a comprehensive cost-effective taxi strategy.

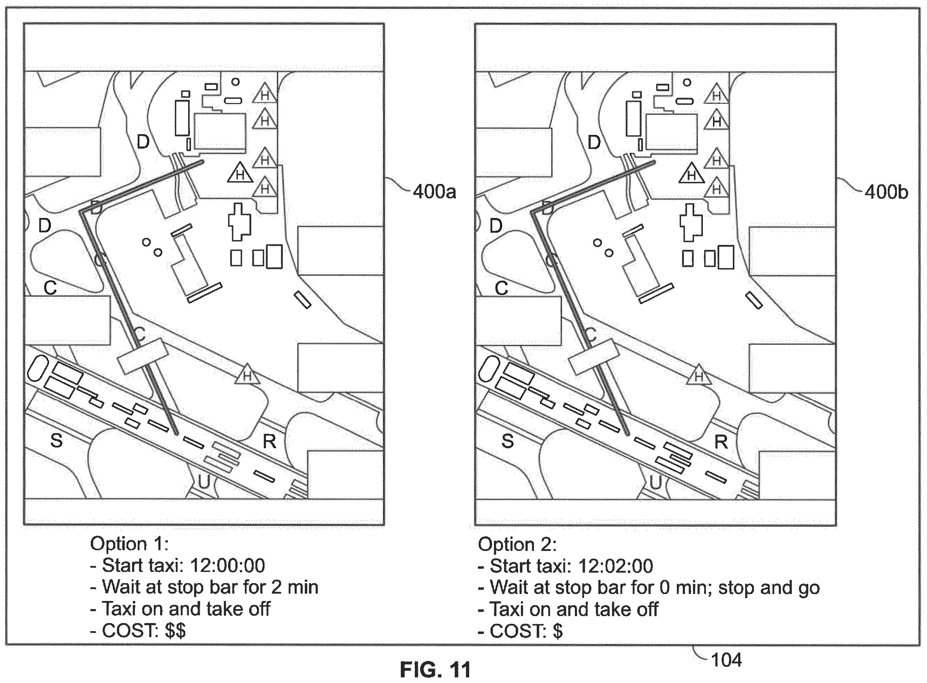

Figure 11 is a diagrammatic representation of a front view of the display 104 showing available taxi scenarios 400a and 400b, according to an example of the present disclosure. In at least one example, the taxi cost determination control unit 102 may output multiple available taxi scenarios, such as 400a and 400b, to provide a pilot different taxiing strategy options. As shown, the available taxi scenario 400a indicates a start time at 12:00, with a wait at a stop bar for 2 minutes, and a total taxi cost. In contrast, the available taxi scenario 400b indicates a start time of 12:02, with no wait at the stop bar, and a reduced total taxi cost. The total taxi cost of the available taxi scenario 400b is less than that of the available taxi scenario 400a due to the aircraft idling at the gate for two extra minutes (instead of taxiing, stopping, and re-accelerating to taxiing speed). Accordingly, a pilot may choose the available taxi scenario 400b over the available taxi scenario 400a.

As used herein, the term "control unit," "central processing unit," "unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the taxi cost determination control unit 102 may be or include one or more processors that are configured to control operation thereof, as described herein.

The taxi cost determination control unit 102 is configured to execute a set of instructions that are stored in one or more data storage units or elements (such as one or more memories), in order to process data. For example, the taxi cost determination control unit 102 may include or be coupled to one or more memories. The data storage units may also store data or other information as desired or needed. The data storage units may be in the form of an information source or a physical memory element within a processing machine.

The set of instructions may include various commands that instruct the taxi cost determination control unit 102 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the taxi cost determination control unit 102. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the taxi cost determination control unit 102 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

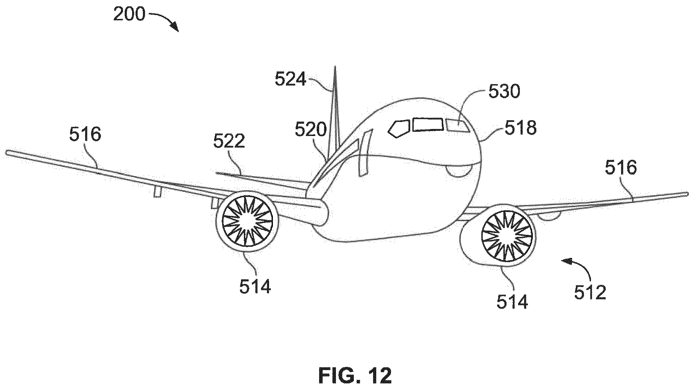

Figure 12 is a diagrammatic representation of a front perspective view of the aircraft 200, according to an exemplary example of the present disclosure. The aircraft 200 includes a propulsion system 512 that may include two turbofan engines 514, for example. Optionally, the propulsion system 512 may include more engines 514 than shown. The engines 514 are carried by wings 516 of the aircraft 200. In some examples, the engines 514 may be carried by a fuselage 518 and/or an empennage 520. The empennage 520 may also support horizontal stabilizers 522 and a vertical stabilizer 524. The fuselage 518 of the aircraft 200 defines an internal cabin, which may include a cockpit 530.

The aircraft 200 may be sized, shaped, and configured other than shown in Figure 12. For example, the aircraft 200 may be a non-fixed wing aircraft, such as a helicopter. As another example, the aircraft 200 may be an unmanned aerial vehicle (UAV).

Referring to Figures 1-12, examples of the present disclosure provide systems and methods that allow large amounts of data to be quickly and efficiently analyzed by a computing device. For example, numerous aircraft 200 may be scheduled to fly between different airports on any given day. A tremendous amount of possible taxiing scenarios may exist for each aircraft at an airport. As such, large amounts of data are being tracked and analyzed. The vast amounts of data are efficiently organized and/or analyzed by the taxi cost determination control unit 102, as described herein. The taxi cost determination control unit 102 analyzes the data in a relatively short time in order to quickly and efficiently output and/or display efficient routes. A human being would be incapable of efficiently analyzing such vast amounts of data in such a short time. As such, examples of the present disclosure provide increased and efficient functionality with respect to prior computing systems, and vastly superior performance in relation to a human being analyzing the vast amounts of data. In short, examples of the present disclosure provide systems and methods that analyze thousands, if not millions, of calculations and computations that a human being is incapable of efficiently, effectively and accurately managing.

As described herein, examples of the present disclosure provide systems and methods for determining various taxiing options for aircraft. Further, examples of the present disclosure provide systems and methods for providing costs for various taxiing scenarios.

While various spatial and directional terms, such as top, bottom, lower, mid, lateral, horizontal, vertical, front and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) may be used in combination with each other. In addition, many modifications may be made to adapt a particular situation or material to the teachings of the various examples of the disclosure without departing from their scope. While the dimensions and types of materials described herein are intended to define the parameters of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims.

In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and may include other examples that occur to those skilled in the art. Such other examples are intended to be within the scope of the claims if the examples have structural elements that do not differ from the literal language of the claims.

## Claims

1. An aircraft (200) taxi cost determination system, comprising:
a taxi cost determination control unit (102) that is configured to determine a total cost of one or more available taxi scenarios (400a, 400b) for an aircraft (200) at an airport according to fuel cost plus engine cost plus crew cost plus maintenance cost for the one or more available taxi scenarios (400a, 400b), the taxi cost determination control unit being further configured to establish an array of quantitatively different acceleration instances and an array of quantitatively different speed instances, and to determine a roll-out distance and time if aircraft engines are returned to idle of the aircraft to stop moving for each combination of acceleration instance and speed instance, and time, and wherein for each such combination of acceleration instance, speed instance and time, the taxi cost determination control unit is configured to shorten a duration of constant taxi speed so the roll-out meets a maximum required taxi time;
the taxi cost determination control unit being further configured to account for a plurality of boundary conditions when determining the total cost of the one or more available taxi scenarios, the plurality of boundary conditions comprising an engine warm up time, a number of stop bars along a taxiway, a minimum time to taxi, and the maximum time to taxi; wherein being configured to take account comprises the taxi cost determination control unit discarding as unavailable any available taxi scenarios not meeting the one or more boundary conditions; and
a display in communication with the taxi cost determination control unit;
in which the taxi cost determination control unit is further configured to display on the display a lowest total cost taxi scenario of the available taxi scenarios.

2. The aircraft (200) taxi cost determination system of claim 1, further comprising an environmental sub-system (108) that is in communication with the taxi cost determination control unit (102), wherein the environmental sub-system (108) stores environmental data (110), and wherein the taxi cost determination control unit (102) factors in the environmental data (110) when determining the total cost of the one or more available taxi scenarios (400a, 400b).

3. The aircraft (200) taxi cost determination system of claim 1 or 2, further comprising at least one of:
an airport database (112) that is in communication with the taxi cost determination control unit (102), wherein the airport data base (112) stores airport data (114), wherein the taxi cost determination control unit (102) analyzes the airport data (114) when determining the total cost of the one or more available taxi scenarios (400a, 400b);
an aircraft database (116) that is in communication with the taxi cost determination control unit (102), wherein the aircraft database (112) stores aircraft data (118) regarding the aircraft (200), and wherein the taxi cost determination control unit (102) analyzes the aircraft data (118) when determining the total cost of the one or more available taxi scenarios (400a, 400b); or
a flight schedule sub-system (120) that is in communication with the taxi cost determination control unit (102), wherein the flight schedule sub-system (120) stores flight schedule data (122) for the airport, and wherein the taxi cost determination control unit (102)
analyzes the flight schedule data (122) when determining the total cost of the one or more available taxi scenarios (400a, 400b).

4. The aircraft (200) taxi cost determination system of any one of claims 1-3, wherein the taxi cost determination control unit (102) establishes possible taxi scenarios based on one or more of environmental data (110), a taxi data (119), aircraft data (118), airport data (114), or flight schedule data (122).

5. The aircraft (200) taxi cost determination system of claim 4, wherein the taxi cost determination control unit (102) discards one or more possible taxi scenarios that are outside of a required time (204, 206, 208) frame as one or more unavailable taxi scenarios (400a, 400b).

6. The aircraft (200) taxi cost determination system of claim 5, wherein the taxi cost determination control unit (102) identifies one or more possible taxi scenarios that are within the required time (204, 206, 208) frame as the one or more available taxi scenarios (400a, 400b).

7. An aircraft (200) taxi cost determination method, comprising:
determining, by a taxi cost determination control unit (102), a total cost of one or more available taxi scenarios (400a, 400b) for an aircraft (200) at an airport according to fuel cost plus engine cost plus crew cost plus maintenance cost for the one or more available taxi scenarios (400a, 400b), the determining comprising establishing an array of quantitatively different acceleration instances and an array of quantitatively different speed instances, and determining a roll-out distance and time if aircraft engines are returned to idle of the aircraft to stop moving for each combination of acceleration instance and speed instance, and time, and wherein for each such combination of acceleration instance, speed instance and time, the determining is configured to shorten a duration of constant taxi speed so the roll-out meets a maximum required taxi time; the determining of the total cost comprising
accounting for one or more boundary conditions, the boundary conditions comprising engine warm up time, a number of stop bars along a taxiway, a minimum time to taxi, and a maximum time to taxi; wherein accounting for comprises
discarding as unavailable by the taxi cost determination control unit any available taxi scenarios not meeting the one or more boundary conditions; and
displaying on a display in communication with the taxi cost determination control unit a lowest total cost taxi scenario of the available taxi scenarios.

8. The aircraft (200) taxi cost determination method of claim 7, further comprising factoring in, by the taxi cost determination control unit (102), environmental data (110) during the determining.

9. The aircraft (200) taxi cost determination method of claim 7 or 8, further comprising analyzing, by the taxi cost determination control unit (102), airport data (114) during the determining.

10. The aircraft (200) taxi cost determination method of any one of claims 7-9, further comprising analyzing, by the taxi cost determination control unit (102), aircraft data (118) during the determining.

11. The aircraft (200) taxi cost determination method of one of claims 7-10, further comprising analyzing, by the taxi cost determination control unit (102), flight schedule data (122) during the determining.

12. The aircraft (200) taxi cost determination method of one of claims 7-11, wherein the determining comprises:
establishing possible taxi scenarios based on one or more of environmental data (110), a taxi data (119), aircraft data (118), airport data (114), or flight schedule data (122);
discarding one or more possible taxi scenarios that are outside of a required time (204, 206, 208) frame as one or more unavailable taxi scenarios (400a, 400b);
identifying one or more possible taxi scenarios that are within the required time (204, 206, 208) frame as the one or more available taxi scenarios (400a, 400b); and
identifying a lowest cost available taxi scenario (400a, 400b) within the one or more available taxi scenarios (400a, 400b).

13. The aircraft (200) taxi cost determination method of one of claims 7-12, in which the aircraft data (118) comprises information regarding a mass of the aircraft or a static friction component.

14. The aircraft (200) taxi cost determination method of one of claims 7-13, in which the flight schedule data (122) comprises scheduled departure and arrival times.

## Patentansprüche

1. System zur Bestimmung der Rollkosten eines Flugzeugs (200), das Folgendes umfasst:
eine Rollkostenbestimmungssteuereinheit (102), die dazu ausgelegt ist, Gesamtkosten eines oder mehrerer verfügbarer Rollszenarien (400a, 400b) für ein Flugzeug (200) an einem Flughafen gemäß Kraftstoffkosten plus Triebwerkkosten plus Besatzungskosten plus Wartungskosten für das eine oder die mehreren verfügbaren Rollszenarien (400a, 400b) zu bestimmen, wobei die Rollkostenbestimmungssteuereinheit ferner dazu ausgelegt ist, ein Array quantitativ unterschiedlicher Beschleunigungsinstanzen und ein Array quantitativ unterschiedlicher Geschwindigkeitsinstanzen zu erstellen und eine Ausrollstrecke und -zeit zu bestimmen, wenn Flugzeugtriebwerke in den Leerlauf des Flugzeugs zurückgebracht werden, bis zum Stoppen der Bewegung für jede Kombination aus Beschleunigungsinstanz und Geschwindigkeitsinstanz und Zeit, und wobei für jede solche Kombination aus Beschleunigungsinstanz, Geschwindigkeitsinstanz und Zeit die Rollkostenbestimmungssteuereinheit dazu ausgelegt ist, eine Dauer konstanter Rollgeschwindigkeit zu verkürzen, so dass das Ausrollen eine maximal erforderliche Rollzeit erfüllt;
wobei die Rollkostenbestimmungssteuereinheit ferner dazu ausgelegt ist, mehrere Randbedingungen zu berücksichtigen, wenn die Gesamtkosten des einen oder der mehreren verfügbaren Rollszenarien bestimmt werden, wobei die mehreren Randbedingungen eine Motoraufwärmzeit, eine Anzahl von Stoppstangen entlang eines Rollwegs, eine minimale Rollzeit und die maximale Rollzeit umfassen; wobei dazu ausgelegt sein, diese zu berücksichtigen, umfasst, dass die Rollkostenbestimmungssteuereinheit alle verfügbaren Rollszenarien, die die eine oder die mehreren Randbedingungen nicht erfüllen, als nicht verfügbar verwirft; und
eine Anzeige in Kommunikation mit der Rollkostenbestimmungssteuereinheit;
wobei die Rollkostenbestimmungssteuereinheit ferner dazu ausgelegt ist, auf der Anzeige ein Rollszenario mit den niedrigsten Gesamtkosten der verfügbaren Rollszenarien anzuzeigen.

2. System zur Bestimmung der Rollkosten eines Flugzeugs (200) nach Anspruch 1, ferner umfassend ein Umgebungsuntersystem (108), das mit der Rollkostenbestimmungssteuereinheit (102) in Kommunikation steht, wobei das Umgebungsuntersystem (108) Umgebungsdaten (110) speichert und wobei die Rollkostenbestimmungssteuereinheit (102) beim Bestimmen der Gesamtkosten des einen oder der mehreren verfügbaren Rollszenarien (400a, 400b) die Umgebungsdaten (110) einbezieht.

3. System zur Bestimmung der Rollkosten eines Flugzeugs (200) nach Anspruch 1 oder 2, das ferner mindestens eines aus Folgendem umfasst:
eine Flughafendatenbank (112), die in Kommunikation mit der Rollkostenbestimmungssteuereinheit (102) steht, wobei die Flughafendatenbank (112) Flughafendaten (114) speichert, wobei die Rollkostenbestimmungssteuereinheit (102) die Flughafendaten (114) analysiert, wenn die Gesamtkosten des einen oder der mehreren verfügbaren Rollszenarien (400a, 400b) bestimmt werden;
eine Flugzeugdatenbank (116), die in Kommunikation mit der Rollkostenbestimmungssteuereinheit (102) steht, wobei die Flugzeugdatenbank (112) Flugzeugdaten (118) bezüglich des Flugzeugs (200) speichert und wobei die Rollkostenbestimmungssteuereinheit (102) die Flugzeugdaten (118) analysiert, wenn die Gesamtkosten des einen oder der mehreren verfügbaren Rollszenarien (400a, 400b) bestimmt werden; oder
ein Flugplanuntersystem (120), das in Kommunikation mit der Rollkostenbestimmungssteuereinheit (102) steht, wobei das Flugplanuntersystem (120) Flugplandaten (122) für den Flughafen speichert und wobei die Rollkostenbestimmungssteuereinheit (102) die Flugplandaten (122) analysiert, wenn die Gesamtkosten des einen oder der mehreren verfügbaren Rollszenarien (400a, 400b) bestimmt werden.

4. System zur Bestimmung der Rollkosten eines Flugzeugs (200) nach einem der Ansprüche 1-3, wobei die Rollkostenbestimmungssteuereinheit (102) mögliche Rollszenarien basierend auf Umgebungsdaten (110) und/oder Rolldaten (119) und/oder Flugzeugdaten (118) und/oder Flughafendaten (114) und/oder Flugplandaten (122) erstellt.

5. System zur Bestimmung der Rollkosten eines Flugzeugs (200) nach Anspruch 4, wobei die Rollkostenbestimmungssteuereinheit (102) ein oder mehrere mögliche Rollszenarien, die außerhalb eines erforderlichen Zeitrahmens (204, 206, 208) liegen, als ein oder mehrere nicht verfügbare Rollszenarien (400a, 400b) verwirft.

6. System zur Bestimmung der Rollkosten eines Flugzeugs (200) nach Anspruch 5, wobei die Rollkostenbestimmungssteuereinheit (102) ein oder mehrere mögliche Rollszenarien, die innerhalb des erforderlichen Zeitrahmens (204, 206, 208) liegen, als das eine oder die mehreren verfügbaren Rollszenarien (400a, 400b) identifiziert.

7. Verfahren zur Bestimmung der Rollkosten eines Flugzeugs (200), das Folgendes umfasst:
Bestimmen, durch eine Rollkostenbestimmungssteuereinheit (102), von Gesamtkosten eines oder mehrerer verfügbarer Rollszenarien (400a, 400b) für ein Flugzeug (200) an einem Flughafen gemäß Kraftstoffkosten plus Triebwerkkosten plus Besatzungskosten plus Wartungskosten für das eine oder die mehreren verfügbaren Rollszenarien (400a, 400b), wobei das Bestimmen das Einrichten eines Arrays von quantitativ unterschiedlichen Beschleunigungsinstanzen und eines Arrays von quantitativ unterschiedlichen Geschwindigkeitsinstanzen umfasst, und Bestimmen einer Ausrollstrecke und -zeit, wenn Flugzeugtriebwerke in den Leerlauf des Flugzeugs zurückgebracht werden, bis zum Stoppen der Bewegung für jede Kombination von Beschleunigungsinstanz und Geschwindigkeitsinstanz und Zeit, und wobei für jede solche Kombination von Beschleunigungsinstanz, Geschwindigkeitsinstanz und Zeit das Bestimmen dazu ausgelegt ist, eine Dauer konstanter Rollgeschwindigkeit zu verkürzen, so dass das Ausrollen eine maximal erforderliche Rollzeit erfüllt; wobei das Bestimmen der Gesamtkosten Folgendes umfasst:
Berücksichtigen einer oder mehrerer Randbedingungen,
wobei die Randbedingungen Motoraufwärmzeit, eine Anzahl von Stoppstangen entlang einer Rollbahn, eine minimale Rollzeit und eine maximale Rollzeit umfassen; wobei das Berücksichtigen Folgendes umfasst:
Verwerfen, durch die Rollkostenbestimmungssteuereinheit, aller verfügbaren Rollszenarien, die die eine oder die mehreren Randbedingungen nicht erfüllen, als nicht verfügbar; und
Anzeigen eines Rollszenarios mit den niedrigsten Gesamtkosten der verfügbaren Rollszenarien auf einer Anzeige in Kommunikation mit der Rollkostenbestimmungssteuereinheit.

8. Verfahren zur Bestimmung der Rollkosten eines Flugzeugs (200) nach Anspruch 7, ferner umfassend das Einbeziehen, durch die Rollkostenbestimmungssteuereinheit (102), von Umgebungsdaten (110) während des Bestimmens.

9. Verfahren zur Bestimmung der Rollkosten eines Flugzeugs (200) nach Anspruch 7 oder 8, ferner umfassend Analysieren, durch die Rollkostenbestimmungssteuereinheit (102), von Flughafendaten (114) während des Bestimmens.

10. Verfahren zur Bestimmung der Rollkosten eines Flugzeugs (200) nach einem der Ansprüche 7-9, ferner umfassend Analysieren, durch die Rollkostenbestimmungssteuereinheit (102), von Flugzeugdaten (118) während des Bestimmens.

11. Verfahren zur Bestimmung der Rollkosten eines Flugzeugs (200) nach einem der Ansprüche 7-10, ferner umfassend Analysieren, durch die Rollkostenbestimmungssteuereinheit (102), von Flugplandaten (122) während des Bestimmens.

12. Verfahren zur Bestimmung der Rollkosten eines Flugzeugs (200) nach einem der Ansprüche 7-11, wobei das Bestimmen Folgendes umfasst:
Aufstellen möglicher Rollszenarien auf Grundlage von Umgebungsdaten (110), Rolldaten (119), Flugzeugdaten (118), Flughafendaten (114) oder Flugplandaten (122);
Verwerfen eines oder mehrerer möglicher Rollszenarien, die außerhalb eines erforderlichen Zeitrahmens (204, 206, 208) liegen, als ein oder mehrere nicht verfügbare Rollszenarien (400a, 400b);
Identifizieren eines oder mehrerer möglicher Rollszenarien, die innerhalb des erforderlichen Zeitrahmens (204, 206, 208) liegen, als das eine oder die mehreren verfügbaren Rollszenarien (400a, 400b); und Identifizieren eines kostengünstigsten verfügbaren Rollszenarios (400a, 400b) innerhalb des einen oder der mehreren verfügbaren Rollszenarien (400a, 400b).

13. Verfahren zur Bestimmung der Rollkosten eines Flugzeugs (200) nach einem der Ansprüche 7-12, wobei die Flugzeugdaten (118) Informationen bezüglich einer Masse des Flugzeugs oder einer Haftreibungskomponente umfassen.

14. Verfahren zur Bestimmung der Rollkosten eines Flugzeugs (200) nach einem der Ansprüche 7-13, wobei die Flugplandaten (122) geplante Abflug- und Ankunftszeiten umfassen.

## Revendications

1. Système de détermination de coût de circulation au sol d'un aéronef (200), comprenant :
une unité de commande de détermination de coût de circulation au sol (102) qui est configurée pour déterminer un coût total d'un ou de plusieurs scénarios de circulation au sol disponibles (400a, 400b) pour un aéronef (200) à un aéroport, selon coût carburant plus coût moteur plus coût équipage plus coût maintenance pour l'un ou les plusieurs scénarios de circulation au sol disponibles (400a, 400b), l'unité de commande de détermination de coût de circulation au sol étant en outre configurée pour établir une série de cas d'accélération quantitativement différents et une série de cas de vitesse quantitativement différents, et pour déterminer une distance et un temps de roulage au sol, si des moteurs d'aéronef sont remis au ralenti, de l'aéronef, pour qu'il s'immobilise pour chaque combinaison de cas d'accélération et de cas de vitesse, et de temps, et dans lequel, pour chaque telle combinaison de cas d'accélération, de cas de vitesse, et de temps, l'unité de commande de détermination de coût de circulation au sol est configurée pour raccourcir une durée de vitesse de circulation au sol constante pour que le roulage au sol respecte un temps de circulation au sol nécessaire maximum ;
l'unité de commande de détermination de coût de circulation au sol étant en outre configurée pour prendre en compte une pluralité de conditions limites lors de la détermination du coût total de l'un ou des plusieurs scénarios de circulation au sol disponibles, la pluralité de conditions limites comprenant un temps de chauffage moteur, un nombre de barres d'arrêt le long d'une voie de circulation au sol, un temps minimum jusqu'à circulation au sol, et le temps maximum jusqu'à circulation au sol ; dans lequel le fait d'être configurée pour prendre en compte comprend le fait que l'unité de commande de détermination de coût de circulation au sol rejette, comme étant indisponibles, de quelconques scénarios de circulation au sol disponibles ne respectant pas l'une ou les plusieurs conditions limites ; et
un dispositif d'affichage en communication avec l'unité de commande de détermination de coût de circulation au sol ;
dans lequel l'unité de commande de détermination de coût de circulation au sol est en outre configurée pour afficher, sur le dispositif d'affichage, un scénario de circulation au sol de coût total le plus bas des scénarios de circulation au sol disponibles.

2. Système de détermination de coût de circulation au sol d'un aéronef (200) de la revendication 1, comprenant en outre un sous-système d'environnement (108) qui est en communication avec l'unité de commande de détermination de coût de circulation au sol (102), dans lequel le sous-système d'environnement (108) stocke des données d'environnement (110), et dans lequel l'unité de commande de détermination de coût de circulation au sol (102) considère les données d'environnement (110) lors de la détermination du coût total de l'un ou des plusieurs scénarios de circulation au sol disponibles (400a, 400b).

3. Système de détermination de coût de circulation au sol d'un aéronef (200) de la revendication 1 ou 2, comprenant en outre au moins un élément parmi :
une base de données d'aéroport (112) qui est en communication avec l'unité de commande de détermination de coût de circulation au sol (102), dans lequel la base de données d'aéroport (112) stocke des données d'aéroport (114), dans lequel l'unité de commande de détermination de coût de circulation au sol (102) analyse les données d'aéroport (114) lors de la détermination du coût total de l'un ou des plusieurs scénarios de circulation au sol disponibles (400a, 400b) ;
une base de données d'aéronef (116) qui est en communication avec l'unité de commande de détermination de coût de circulation au sol (102), dans lequel la base de données d'aéronef (112) stocke des données d'aéronef (118) concernant l'aéronef (200), et dans lequel l'unité de commande de détermination de coût de circulation au sol (102) analyse les données d'aéronef (118) lors de la détermination du coût total de l'un ou des plusieurs scénarios de circulation au sol disponibles (400a, 400b) ; ou
un sous-système de programme de vol (120) qui est en communication avec l'unité de commande de détermination de coût de circulation au sol (102), dans lequel le sous-système de programme de vol (120) stocke des données de programme de vol (122) pour l'aéroport, et dans lequel l'unité de commande de détermination de coût de circulation au sol (102) analyse les données de programme de vol (122) lors de la détermination du coût total de l'un ou des plusieurs scénarios de circulation au sol disponibles (400a, 400b).

4. Système de détermination de coût de circulation au sol d'un aéronef (200) de l'une quelconque des revendications 1 à 3, dans lequel l'unité de commande de détermination de coût de circulation au sol (102) établit des scénarios de circulation au sol possibles sur la base d'un ou de plusieurs types de données parmi des données d'environnement (110), des données de circulation au sol (119), des données d'aéronef (118), des données d'aéroport (114), ou des données de programme de vol (122).

5. Système de détermination de coût de circulation au sol d'un aéronef (200) de la revendication 4, dans lequel l'unité de commande de détermination de coût de circulation au sol (102) rejette un ou plusieurs scénarios de circulation au sol possibles qui sont en dehors d'un intervalle d'un temps nécessaire (204, 206, 208) comme étant un ou plusieurs scénarios de circulation au sol indisponibles (400a, 400b).

6. Système de détermination de coût de circulation au sol d'un aéronef (200) de la revendication 5, dans lequel l'unité de commande de détermination de coût de circulation au sol (102) identifie un ou plusieurs scénarios de circulation au sol possibles qui sont dans les limites de l'intervalle d'un temps nécessaire (204, 206, 208) comme étant l'un ou les plusieurs scénarios de circulation au sol disponibles (400a, 400b).

7. Procédé de détermination de coût de circulation au sol d'un aéronef (200), comprenant :
la détermination, par une unité de commande de détermination de coût de circulation au sol (102), d'un coût total d'un ou plusieurs scénarios de circulation au sol disponibles (400a, 400b) pour un aéronef (200) à un aéroport, selon coût carburant plus coût moteur plus coût équipage plus coût maintenance pour l'un ou les plusieurs scénarios de circulation au sol disponibles (400a, 400b), la détermination comprenant l'établissement d'une série de cas d'accélération quantitativement différents et d'une série de cas de vitesse quantitativement différents, et la détermination d'une distance et d'un temps de roulage au sol, si des moteurs d'aéronef sont remis au ralenti, de l'aéronef, pour qu'il s'immobilise pour chaque combinaison de cas d'accélération et de cas de vitesse, et de temps, et dans lequel, pour chaque telle combinaison de cas d'accélération, de cas de vitesse, et de temps, la détermination est configurée pour raccourcir une durée de vitesse de circulation au sol constante pour que le roulage au sol respecte un temps de circulation au sol nécessaire maximum ; la détermination du coût total comprenant
la prise en compte d'une ou de plusieurs conditions limites, les conditions limites comprenant un temps de chauffage moteur, un nombre de barres d'arrêt le long d'une voie de circulation au sol, un temps minimum jusqu'à circulation au sol, et un temps maximum jusqu'à circulation au sol ; dans lequel la prise en compte comprend
le rejet, comme étant indisponibles, par l'unité de commande de détermination de coût de circulation au sol, de quelconques scénarios de circulation au sol disponibles ne respectant pas l'une ou les plusieurs conditions limites ; et
l'affichage, sur un dispositif d'affichage en communication avec l'unité de commande de détermination de coût de circulation au sol, d'un scénario de circulation au sol de coût total le plus bas des scénarios de circulation au sol disponibles.

8. Procédé de détermination de coût de circulation au sol d'un aéronef (200) de la revendication 7, comprenant en outre la considération, par l'unité de commande de détermination de coût de circulation au sol (102), de données d'environnement (110) durant la détermination.

9. Procédé de détermination de coût de circulation au sol d'un aéronef (200) de la revendication 7 ou 8, comprenant en outre l'analyse, par l'unité de commande de détermination de coût de circulation au sol (102), de données d'aéroport (114) durant la détermination.

10. Procédé de détermination de coût de circulation au sol d'un aéronef (200) de l'une quelconque des revendications 7 à 9, comprenant en outre l'analyse, par l'unité de commande de détermination de coût de circulation au sol (102), de données d'aéronef (118) durant la détermination.

11. Procédé de détermination de coût de circulation au sol d'un aéronef (200) de l'une des revendications 7 à 10, comprenant en outre l'analyse, par l'unité de commande de détermination de coût de circulation au sol (102), de données de programme de vol (122) durant la détermination.

12. Procédé de détermination de coût de circulation au sol d'un aéronef (200) de l'une des revendications 7 à 11, dans lequel la détermination comprend :
l'établissement de scénarios de circulation au sol possibles sur la base d'un ou de plusieurs types de données parmi des données d'environnement (110), des données de circulation au sol (119), des données d'aéronef (118), des données d'aéroport (114), ou des données de programme de vol (122) ;
le rejet d'un ou de plusieurs scénarios de circulation au sol possibles qui sont en dehors d'un intervalle d'un temps nécessaire (204, 206, 208) comme étant un ou plusieurs scénarios de circulation au sol indisponibles (400a, 400b) ;
l'identification d'un ou de plusieurs scénarios de circulation au sol possibles qui sont dans les limites de l'intervalle d'un temps nécessaire (204, 206, 208) comme étant l'un ou les plusieurs scénarios de circulation au sol disponibles (400a, 400b) ; et
l'identification d'un scénario de circulation de sol disponible de coût le plus bas (400a, 400b) parmi l'un ou les plusieurs scénarios de circulation au sol disponibles (400a, 400b).

13. Procédé de détermination de coût de circulation au sol d'un aéronef (200) de l'une des revendications 7 à 12, dans lequel les données d'aéronef (118) comprennent des informations concernant une masse de l'aéronef ou une composante de frottement statique.

14. Procédé de détermination de coût de circulation au sol d'un aéronef (200) de l'une des revendications 7 à 13, dans lequel les données de programme de vol (122) comprennent des heures de départ et d'arrivée programmées.
